(19) **Europäisches Patentamt**

**European Patent Office**

**Office européen des brevets**

(11) Veröffentlichungsnummer: **0 095 746**
**B1**

(12) **EUROPÄISCHE PATENTSCHRIFT**

(45) Veröffentlichungstag der Patentschrift:
**28.12.88**

(51) Int. Cl.⁴: **B 43 L  13/00**

(21) Anmeldenummer: **83105251.9**

(22) Anmeldetag: **27.05.83**

(54) **Numerisch gesteuertes Schreibgerät.**

(30) Priorität: **01.06.82  DE 3220568**

(43) Veröffentlichungstag der Anmeldung:
**07.12.83 Patentblatt 83/49**

(45) Bekanntmachung des Hinweises auf die Patenterteilung:
**28.12.88 Patentblatt 88/52**

(84) Benannte Vertragsstaaten:
**AT CH FR GB IT LI NL SE**

(56) Entgegenhaltungen:
FR-A- 2 356 985
US-A- 2 898 175
US-A- 3 473 157
US-A- 3 936 712

*"Der Tuscheschreiber, system delta-script CNC,*
*HELD"*, 1982, KURT HELD GMBH, TROSSINGEN (DE)
*"Stano-plot III mit Systemerweiterung; Zeichnen und*
*Beschriften auf Knopfdruck"*, 1982, STANDARDGRAPH
ZEICHENGERÄTE GMBH, GERETSRIED (DE)

(73) Patentinhaber: **Held, Kurt, Alte Strasse 1,**
**D-7218 Trossingen 2 (DE)**

(72) Erfinder: **Held, Kurt, Alte Strasse 1,**
**D-7218 Trossingen 2 (DE)**

ACTORUM AG

**Beschreibung**

Die Erfindung betrifft ein numerisch gesteuertes Schreibgerät gemäss dem Oberbegriff des Patentanspruchs 1.

Bei numerisch gesteuerten Schreibgeräten ist es aus der Sicht des Anwenders erwünscht, neben den üblicherweise über die Gerätetastatur abrufbaren fest oder durch Speicherung auf auswechselbaren Datenträgern satzweise festgelegten Zeichen- und Symbolsammlungen auch solche Zeichen und Symbole sofort bei Bedarf programmieren zu können, die nur für ihn oder nur vorübergehend interessant, vor allem jedoch kurzfristig verfügbar sind.

Es ist nach den Firmenschriften Rotring NC-Scriber und Held deltascript CNC bekannt, sogenannte Branchensymbole auf elektrisch oder ähnlich programmierbaren Datenträgern, zum Beispiel elektrisch oder elektromagnetisch programmierbaren Speichern fest abzulegen, diesen Speichern die Form einer Kassette zu geben und die Schreibgerätesteuerung mit Steckeinrichtungen auszurüsten, die den schnellen Austausch der die jeweils benötigte Symbolsammlung enthaltenden Kassette durch den Anwender gestattet. Nachteil dieser Geräte ist der Zwang für den Anwender, eigenen, möglicherweise nur kurzfristig benötigten Symbolbedarf durch den Schreibgerätehersteller nach eingereichten Vorlagen programmieren und auf Kassetten abspeichern zu lassen. Allein die Postlaufzeiten für dieses Vorgehen können ein Mehrfaches länger sein, als das Interesse am Einsatz solcher Symbole besteht.

Bei sogenannten Flachbettplottern, zum Beispiel nach Firmenschrift SG stanoplott III, die ebenfalls für Beschriftungen und Planentwürfe mit Branchensymbolen eingesetzt werden, ist es bekannt, mit der Plottersteuerung programmierte Branchensymbole auf einer Tonbandkassette abzulegen und sie bei Bedarf von dort in den Direktzugriffsspeicher der Steuerung zu überspielen. Nachteil dieser Lösung ist der Mechanik- und Steuerungsaufwand für Aufnahme und Wiedergabe der die Symbole beschreibenden digitalen Information vom Tonband als Datenträger.

Bei numerisch gesteuerten Werkzeugmaschinen ist es zum Zwecke der Speichererweiterung aus der FR-A-2 356 985 bekannt, die Gerätesteuerung mit zwei Speichern auszurüsten, wobei sich der eine intern in der Gerätesteuerung befindet und der zweite steckbar mit der Gerätesteuerung verbunden ist. Damit können Daten für die Gerätesteuerung vom ersten in den zweiten Speicher geschrieben und vom zweiten in den ersten Speicher gelesen werden. Zur Eingabe von Daten für die Steuerung des Werkzeugträgers ist eine Tastatur vorhanden. Da der Anwender die numerischen Werte für die Bewegungen des Werkzeugträgers zuvor selbst ermitteln muss, ist eine derartige Programmierung sehr umständlich, zeitraubend und fehleranfällig.

In der Literatur werden weiter Plotter bzw. Schreibgeräte beschrieben, die teilweise ebenfalls eine Programmierung von Zeichen oder Symbolen gestatten.

So beschreibt der Zeitschriftenartikel «VDI-Z, Band 20, Februar 1970, VDI-Verlag, Düsseldorf, H. Opitz: Systeme zur rechnerunterstützten Zeichnungserstellung, Seite 90 bis 94» CAD-Systeme zur Erstellung von Zeichnungen mit Hilfe eines Computers, die als Peripherie unter anderem einen Plotter und einen Digitizer besitzen. Die geometrischen Daten einer Skizze werden mit Hilfe des Digitizers aufgenommen, indem eine handgeführte, über ein Kabel mit dem Computer verbundene Messlupe auf die entsprechenden Punkte der Skizze geführt wird. Solche Punkte können die Anfangs- und Endpunkte einer Geraden oder der Mittelpunkt und Radius eines Kreises sein.

Bei dem genannten System sind der Plotter und der Digitizer zwei verschiedene Geräte, wobei die am Digitizer angebrachte Messlupe mit dem Plotter keinerlei Verbindung besitzt. Die Messlupe wird handgeführt, also nicht mit einer den Schreibstift bewegenden Gerätesteuerung verfahren. Aufgrund der beschränkten Feinmotorik der Hand können einzelne Punkte höchstens auf $1/10$ mm genau mit einer solchen handgeführten Messlupe digitalisiert werden. Bei den Zeichen oder Symbolen für ein numerisch gesteuertes Schreibgerät ist jedoch eine Genauigkeit von $1/100$ mm oder besser bei der Digitalisierung nötig.

In der Literaturstelle wird erwähnt, dass die Koordinatenwerte aus der Skizze mit der handgeführten Messlupe des Digitizers erfasst und in den Rechner übertragen werden. Wie diese Übertragung ausgelöst wird und wo die Koordinatenwerte im Computer anschliessend abgespeichert werden, bleibt jedoch offen. Als geometrische Daten werden der Anfangs- und Endpunkt einer Geraden, Mittelpunkt und Radius eines Kreises, usw. aus der Skizze erfasst. Bei den Symbolen, wie sie bevorzugt von dem numerisch gesteuerten Schreibgerät gezeichnet werden, kennt der Benutzer jedoch in der Regel weder den Mittelpunkt noch den Radius des Kreises von gekrümmten Bahnteilen. Bei der beschriebenen Vorgehensweise wäre der Benutzer somit gezwungen, diese Grössen vor der Digitalisierung zu ermitteln, was keinesfalls auf einfache Weise möglich ist. Eine Programmierung dieser Systeme ist damit nicht ohne grösseren Aufwand möglich.

Der Zeitschriftenartikel «MACHINE DESIGN, Vol. 44, 6. April 1972, F. Lavoie: The Instant Draftsman, Seite 68 bis 72» beschreibt ebenfalls CAD-Systeme zur Erstellung von Zeichnungen aus einer Skizze. Neben einem Minicomputer bestehen diese Systeme in der Regel unter anderem auch aus einem Plotter und Digitizer. An Digitizern sind solche verfügbar, deren Cursor auf einer X–Y-Führungsbahn läuft oder solche mit einem freien Cursor, der nur mittels eines Kabels mit der Maschine verbunden ist. Die Aufnahme von Symbolen kann auf dem Digitizer durch Nachfahren erfolgen. Um beim Digitalisieren nicht zu genau sein zu müssen, bieten einige dieser Maschinen parabolische, lineare und zirkulare Interpolationen für das anschliessende Auszeichnen der digitalisierten Kurven an.

In dieser Literaturstelle erfolgen keine näheren Angaben, wie die Symbole digitalisiert und die anfallenden Daten dann weiterverarbeitet werden. Die lineare, zirkulare oder parabolische Interpolationen, die einige dieser Maschinen bieten, beziehen sich auf das Zeichnen bzw. Plotten von Bahnteilen, die bereits in digitalisierter Form vorliegen. Dabei wird die Steuerung des Schreibstiftes des Plotters entsprechend angesteuert, um gerade, kreisförmige oder parabolische Bahnkurven bereits digitalisierter Symbole auszuzeichnen. Insbesondere wird keine Anregung gegeben, aus einer Vielzahl von für die Digitalisierung geeigneten Punkten einzelne bestimmte kennzeichnende Punkte auszuwählen.

Es ist ferner bei automatischen Zeichen- und Digitalisiergeräten aus der US-A-3 473 157 bekannt, die im Oberbegriff des Anspruches 1 berücksichtigt ist, einen photoelektrischen Kopf auf dem die Zeicheneinrichtung tragenden Wagen anzuordnen, dessen Optik unter automatischer Computersteuerung die Koordinaten einer vorgegebenen Linie aufnimmt. Diese Daten können auf einem Bildschirm sowie auf Lochstreifen oder Magnetband ausgegeben werden. Im Computer abgespeicherte Bahnteile können durch Ansteuerung der Antriebe des Zeichengerätes über einen Interpolator unter linearer, zirkularer oder parabolischer Interpolation ausgezeichnet werden.

Bei der linearen, zirkularen oder parabolischen Interpolation handelt es sich um eine entsprechende Ansteuerung der Antriebe des Plotters, um bereits digital vorliegende Bahnteile als Geraden, kreisförmige oder parabolische Kurven auszuzeichnen. Für die Auswahl bestimmter kennzeichnender Punkte für die Digitalisierung wird dadurch jedoch keine Anregung gegeben. Nachteilig ist auch, dass diese Art der Digitalisierung einen hohen apparativen Aufwand sowie eine sehr komplexe Datenaufnahme mit einer Vielzahl von redundanten Punkten bedingt. Es ist damit festzustellen, dass diese Art der «Selbstprogrammierung» nicht mit einfachen Mitteln ausführbar ist und den insbesondere an klein und handlich ausgebildeten Schreibgeräten gestellten Anforderungen nicht genügt.

Ausgehend von diesem Stand der Technik besteht die Aufgabe der vorliegenden Erfindung darin, eine für klein und handlich ausgebildete Schreibgeräte geeignete, die Funktionsgruppen des Schreibgeräts benutzende und einen nur geringen apparativen Aufwand besitzende Einrichtung zu schaffen, mit deren Hilfe der Schreibgeräteanwender die die Symbole beschreibenden digitalen Informationen auf einfache Weise aufnehmen und abspeichern kann.

Die Lösung dieser Aufgabe wird durch die im Kennzeichen des Patentanspruchs 1 beschriebene technische Lehre vermittelt. Vorteilhafte Ausgestaltungen der Erfindung werden in den Patentansprüchen 2 bis 5 angegeben.

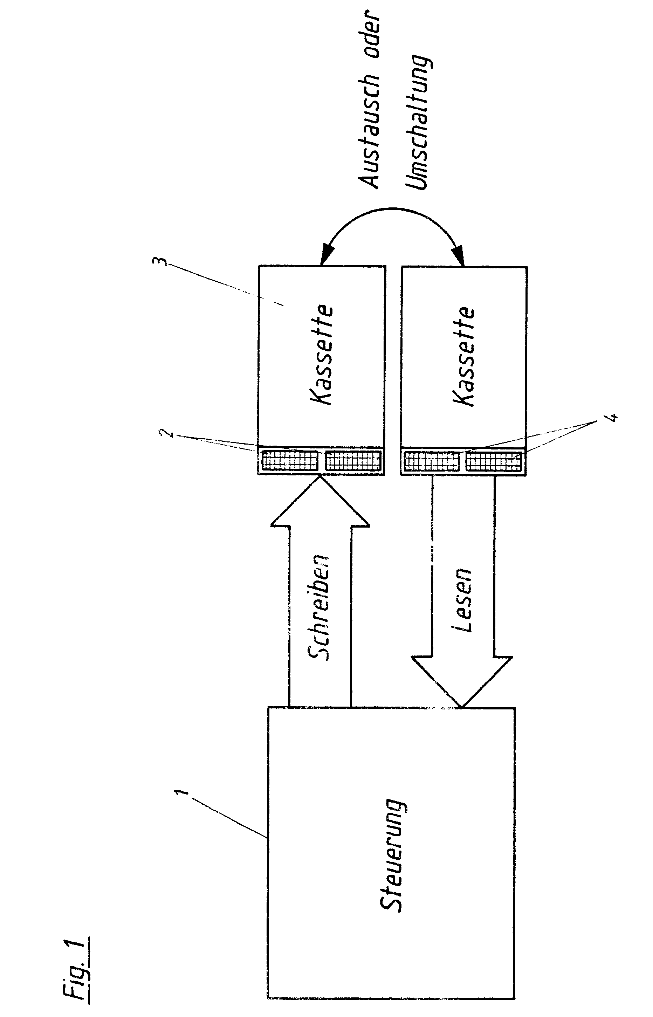

In der Gerätesteuerung 1 (vergleiche Figur 1) ist eine eigene Steckvorrichtung 2 zur Aufnahme einer unprogrammierten Speicherkassette 3 angeordnet, über die die Symbole beschreibende Information an diese Kassette übergeben wird. In einer weiteren Steckvorrichtung 4 wird die aus 3 eingelegte programmierte Kassette 3 gelesen oder es wird ein- und dieselbe Steckvorrichtung durch an sich bekannte elektrische oder mechanische Umschaltung jeweils auf Lese- oder Schreibbetrieb geschaltet.

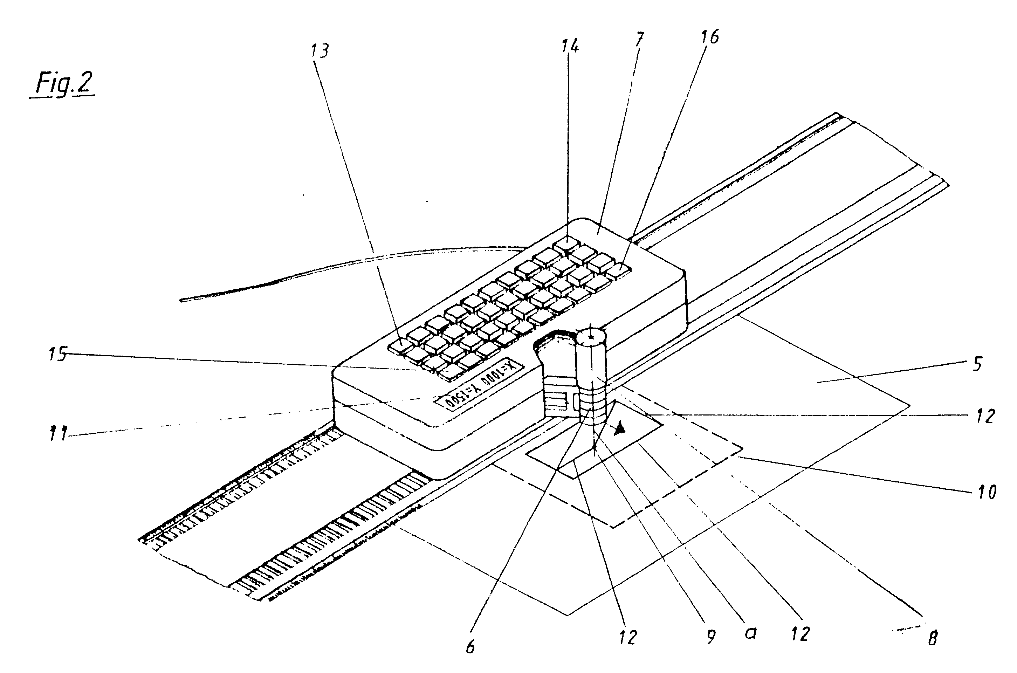

Um die Definition der die Symbole beschreibenden Information auch aus kleinformatigen, unvergrösserten Vorlagen zu ermöglichen, wird weiter vorgeschlagen (vgl. Fig. 2), statt dem z.B. Tuscheschreiber in die Schreiberaufnahme des NC-Schreibgerätes 7, z.B. nach Firmenprospekt Rotring NC, Held deltascript CNC oder SG stanoplott III eine Justierlupe oder ein Justiermikroskop 8 einzusetzen oder so anzubauen, dass diese ein genaues manuelles Anfahren der die Symbolbahn kennzeichnenden Bahnpunkte 9 mit dem z.B. Justiermikroskop 8 und dadurch die Übernahme der auf diese Weise festgelegten Bahnkoordinaten bei 9 in ein dafür bereitgehaltenes Datengerüst durch einen einzigen Tastendruck ermöglichen.

Um die Definition kennzeichnender Bahnpunkte zu beschleunigen und zu sichern, wird weiter vorgeschlagen, den jeweiligen Ort (in Fig. 2 beispielhaft mit a bezeichnet) des Justiermikroskops 8 im Schreibbereich 10 des NC-Schreibgeräts 7, beschrieben durch Polar- oder Kartesische Koordinaten je nach gewählter Beschreibungsmethode, auf der alphanumerischen Anzeige 11 mit zweckmässig gewählter Auflösung, z.B. 0,01 mm auszugeben, um gegebenenfalls Fehler in der Darstellung der Vorlage 5 auszugleichen.

Da der weitaus grösste Teil der für Zeichner und Ingenieure interessanten Symbole aus zueinander rechtwinklig oder parallel verlaufenden Bahnstücken 12 zusammengesetzt ist, wird das NC-Schreibgerät 7 für die Betriebsart «Zeichendefinition» mit einer durch einfachen Druck der Tasten 13 und 14 auslösbaren Funktion «Fahren nach x = + und x = − sowie der Tasten 15 und 16 Fahren nach y = + und y = − ausgerüstet und die Funktion dieser Tasten so definiert, dass eine Betätigung von z.B. über 200 ms Dauer ein stetiges Verfahren der Schreiberaufnahme 6 mit dem Justiermikroskop 8 nach + oder −, je nach Taste, ergibt, ein Tippbetrieb unter z.B. 200 ms Dauer jedoch eine inkrementale Fahrbewegung um ein festes Fahrweginkrement, z.B. 0,01 oder 0,1 mm mit entsprechender Anzeige des absoluten, aktuellen Orts des Justiermikroskops 8 in Bezug auf die Koordinatenachsen.

Um geschlossene Bahnstücke mit Hilfe einer Einrichtung gemäss Fig. 1 möglichst im ersten Versuch fehlerfrei zu definieren, wird das die beschriebene Methode der Symboldefinition stützende Betriebsprogramm so angelegt, dass gerade Bahnteile mit Anfangs- und Endpunktkoordinaten, jeweils in Fahrtrichtung, definiert sind, Kreisabschnitte mit Anfangs-, Zwischen- und Endpunktkoordinaten, Ellipsenabschnitte mit Anfangs-, zwei Zwischen- und Endpunktkoordinaten und Vollkreise so, dass Anfangs- und Endpunktkoordinaten identisch, der Zwischenpunkt jedoch auf dem Anfang = Endpunkt gemeinsamen Durchmesser liegen. Ausserdem wird festgelegt, dass die Endkoordinate eines beliebigen wie oben bestimmten Bahnstücks mit der Anfangskoordinate des daran anschliessenden beliebigen Bahnstücks identisch ist, solange die den z.B. Tuscheschreiber führende Aufnahme diesen auf zu beschreibende Fläche drücken, also schreiben soll.

Die mit der erfindungsgemässen Einrichtung ausgestalteten Schreibgeräte erzielbaren Vorteile beim Anwender sind augenfällig. Da entsprechend der Funktion solcher Geräte nur Symbole geschrieben werden können, die kleiner sind als der maximale Schreibbereich, der durch die geometrischen Abmessungen der x-y-Führungsmechanik bestimmt ist, können Vorlagen in natürlicher Grösse mit hoher Genauigkeit in Bahninformation umgesetzt, sofort probeweise ausgegeben und gegebenenfalls fest abgespeichert werden.

Dieser Betrieb entspricht in besonderem Mass den praktischen Erfordernissen am Zeichenbrett, an dem solche Geräte vor allem eingesetzt werden. Ein Sonderzeichen oder ein wiederkehrendes Zeichnungselement wird als solches regelmässig erst im Verlauf der Entwurfsarbeit als zeitaufwendig oder wiederkehrend erkannt, zu spät, um an räumlich gegebenenfalls weit entfernten Programmierplätzen darauf zu reagieren.

**Patentansprüche**

1. Numerisch gesteuertes Schreibgerät (7) mit einer Gerätesteuerung (1), mit einem auf einer Schreibebene verfahrbaren Wagen, mit einem Tuscheschreiber, mit zwei nach verschiedenen Koordinatenrichtungen wirkenden, von der Gerätesteuerung (1) gesteuerten Antrieben für den Schreiber, die ihre Bahninformationen in Schreibbewegungen des Schreibers umwandeln, mit entweder von den Antrieben wegsynchron bewegten Wegimpulsgebern für die Rückmeldung der Weginformation an die Gerätesteuerung (1) oder Schrittmotoren für die inkrementale Darstellung der Bahnbewegung des Schreibers, mit einer in der Gerätesteuerung (1) vorgesehenen Einrichtung zum Programmieren von selbst definierten Schriftzeichen und Symbolen durch den Anwender, wobei die Speichermittel für diese Schriftzeichen und Symbole einen ersten, intern in der Gerätesteuerung (1) befindlichen Speicher (RAM) und einen zweiten, mit der Gerätesteuerung (1) fest oder lösbar verbundenen Speicher (3) umfassen, der die zunächst in den ersten Speicher einprogrammierten Schriftzeichen und Symbole übernimmt, die umgekehrt wieder in den ersten Speicher einlesbar sind, und mit einer optischen Anzeige (11) und einem optischen Vergrösserungsapparat (8), mit dessen Hilfe einzelne kennzeichnende Bahnpunkte (9) einer Vorlage (5) in ihren Koordinaten genau ermittelbar und in ein bahnbeschreibendes Programm in digitaler Form übernehmbar sind, dadurch gekennzeichnet, dass der zweite Speicher (3) elektrisch beschreibbar oder elektrisch beschreib- und löschbar ist, dass der Tuscheschreiber gegen ein an gleicher Stelle koaxial einsetzbares Justiermikroskop (8) austauschbar ist, dass das Justiermikroskop (8) den optischen Vergrösserungsapparat bildet, wobei die durch dieses Justiermikroskop (8) ermittelten Bahnpunkte der Vorlage durch Tastendruck in das bahnbeschreibende Programm übernehmbar sind, und dass im Betriebsprogramm der Gerätesteuerung (1) gerade Bahnteile mit den ermittelten Anfangs- und Endpunktkoordinaten jeweils in Fahrtrichtung, Kreisabschnitte mit Anfangs-, Zwischen- und Endpunktkoordinaten, Ellipsenabschnitte mit Anfangs-, zwei Zwischen- und Endpunktkoordinaten und Vollkreise so definiert sind, dass Anfangs- und Endpunktkoordinaten identisch, der Zwischenpunkt jedoch auf dem dem Anfangs- und Endpunkt gemeinsamen Durchmesser liegen.

2. Schreibgerät nach Anspruch 1, dadurch gekennzeichnet, dass der zweite Speicher (3) als einsteckbare Speicherkassette ausgebildet ist.

3. Schreibgerät nach Anspruch 1 oder 2, dadurch gekennzeichnet, dass bestimmte Tasten (13, 14, 15, 16) eines Tastenfeldes des Gerätes (7) zum Verfahren des optischen Vergrösserungsapparates (8) in +x, −x, +y, und −y-Koordinatenrichtung derart geschaltet sind, dass eine Dauerbetätigung über eine bestimmte Zeitspanne, zum Beispiel 200 ms eine stetige Fahrbewegung in der gewünschten Richtung, ein kurzes Antippen, zum Beispiel unter 200 ms, jedoch eine schrittweise Fahrbewegung, zum Beispiel in Schritten von jeweils 0,01 oder 0,1 mm ergibt.

4. Schreibgerät nach einem der Ansprüche 1 bis 3, dadurch gekennzeichnet, dass die ermittelten Koordinaten der kennzeichnenden Bahnpunkte (9) in einer alphanumerischen Anzeige (11) ausgebbar sind.

5. Schreibgerät nach einem der Ansprüche 1 bis 4, dadurch gekennzeichnet, dass der zweite Speicher (3) entweder in einem Schreibschacht (2) programmier- und löschbar sowie in einem besonderen Leseschacht (4) lesbar oder im Schreibschacht (2) durch Umschaltung beschreibbar, löschbar und lesbar ist.

**Claims**

1. Numerically controlled writing instrument (7) with an instrument control (1), with a carriage movable on a writing plane, with an ink recorder, with two drives for the recorder, which are controlled by the instrument control (1), act in different co-ordinate directions and convert their path information data into writing movements of the recorder, with either travel pulse transmitters moved in equal travel by the drives for the reporting of the travel information back to the instrument control (1) or stepping motors for the incremental representation of the path movement of the recorder, with an equipment provided in the instrument control (1) for the programming of self-defined characters and symbols by the user, wherein the storage means for these characters and symbols comprise a first store (RAM) disposed internally in the instrument control (1) and a second store (3), which is firmly or detachably connected with the instrument control (1) and initially takes over the characters and symbols, which are programmed into the first store and which conversely are again readable into the first store, and with an optical indication (11) and an optical enlarging device (8), with the aid of which individual characterising path points (9) of an original (5) are determinable exactly and able to be taken over in digital form into a program describing the path, characterised thereby, that the second store (3) is electrically inscribable or electrically inscribable and erasable, that the ink recorder is exchangeable against an adjusting microscope (8) insertable co-axially at the same place, that the adjusting microscope (8) forms the optical enlarging apparatus, wherein the path points of the original, which are determined through this adjusting microscope (8), are able to be taken over by key pressure into the program describing the path, and that straight path parts with the determined start and end point co-ordinates each time in direction of travel, circular portions with start, intermediate and end point co-ordinates, elliptical portions with start, two intermediate and end point co-ordinates and full circles are so defined in the operating program of the instrument control (1) that start and end point co-ordinates are identical, but the intermediate point lies on the start and end point of common diameter.

2. Writing instrument according to claim 1, characterised thereby, that the second store (3) is constructed as plug-in storage cassette.

3. Writing instrument according to claim 1 or 2, characterised thereby, that certain keys (13, 14, 15, 16) of a key field of the instrument (7) are so connected for the movement of the optical enlarging apparatus in +x, −x, +y and −y co-ordinate direction that a continuous operation for a certain time span, for example 200 milliseconds, results in a steady travel movement in the desired direction, but a brief touching, for example of less than 200 milliseconds, results in a stepwise travel movement, for example in steps each of 0.01 or 0.1 millimetres.

4. Writing instrument according to one of the claims 1 to 3, characterised thereby, that the determined co-ordinates of the characterising path points (9) are issuable in an alpha-numeric indication (11).

5. Writing instrument according to one of the claims 1 to 4, characterised thereby, that the second store (3) is either programmable and erasable in a writing section (2) as well as readable in a special reading section (4) or through switching-over inscribable, erasable and readable in the writing section (2).

**Revendications**

1. Appareil enregistreur (7) commandé numériquement avec une commande d'appareil (1), avec un chariot susceptible d'être déplacé sur un plan d'enregistrement, avec un stylet inscripteur à l'encre de chine, avec deux entraînements pour cet enregistreur, entraînements commandés par la commande de l'appareil (1) et agissant selon deux directions différentes de coordonnées, ces entraînements convertissant leurs informations de trajectoire en déplacement du stylet inscripteur, avec soit des émetteurs d'impulsions de trajet déplacés en synchronisme de trajet par les entraînements pour la répétition de l'information de trajet sur la commande d'appareil (1), soit des moteurs pas à pas pour la représentation incrémentale du déplacement du stylet inscripteur, avec un dispositif prévu dans la commande d'appareil (1) pour programmer des signes d'écriture et des symboles définis par l'utilisateur lui-même, les moyens de mémorisation pour ces signes d'écriture et ces symboles comportant une première mémoire (RAM) se trouvant à l'intérieur de la commande d'appareil (1) et une seconde mémoire (3) reliée de façon fixe ou amovible à la commande d'appareil (1), et qui prend en charge les signes d'écriture et les symboles tout d'abord programmés dans la première mémoire, qui, à l'inverse, peuvent à nouveau être lus dans la première mémoire, et avec un affichage optique (11) et un équipement optique d'agrandissement (8), à l'aide desquels des points individuels caractéristiques de courbes (9) d'un modèle (5) peuvent être déterminés de façon précise par leurs coordonnées et être transférés sous forme numérique dans un programme décrivant la courbe, appareil enregistreur caractérisé en ce que la seconde mémoire (3) peut recevoir électriquement des inscriptions ou bien recevoir électriquement des inscriptions et être effacées électriquement, en ce que le stylet inscripteur à encre de chine est susceptible d'être échangé contre un microscope d'ajustage (8) pouvant être mis en place co-axialement au même emplacement, en ce que ce microscope d'ajustage (8) constitue l'équipement optique d'agrandissement, les points de courbes du modèle, déterminés par ce microscope d'ajustage (8) étant susceptibles d'être transférés dans le programme décrivant la courbe en appuyant sur une touche, tandis que dans le programme de fonctionnement de la commande d'appareil (1), les parties de courbes rectilignes sont définies par les coordonnées du point de départ et du point terminal selon la direction de déplacement, les parties circulaires par les coordonnées du point de départ, d'un point intermédiaire et d'un point terminal, les parties en ellipse par les coordonnées du point de départ, de deux points intermédiaires et d'un point terminal, et les cercles complets sont définis en ce que les coordonnées du point de départ et du point terminal sont identiques, mais que le point intermédiaire se situe sur le diamètre commun au point de départ et au point terminal.

2. Appareil enregistreur selon la revendication 1, caractérisé en ce que la deuxième mémoire (3) est réalisée sous la forme d'une cassette de mémorisation enfichable.

3. Appareil enregistreur selon la revendication 1 ou 2, caractérisé en ce que des touches déterminées (13, 14, 15, 16) d'un clavier de l'appareil (7) sont commutées pour le déplacement de l'équipement optique d'agrandissement (8) dans la direction des coordonnées +x, −x, +y, et −y de façon qu'un actionnement durable sur un laps de temps déterminé par exemple 200 ms, provoque un déplacement constant dans la direction souhaitée, tandis qu'une frappe de courte durée, par exemple inférieure à 200 ms, provoque un déplacement pas à pas, par exemple selon des pas de respectivement 0,01 ou bien 0,1 mm.

4. Appareil enregistreur selon une des revendications 1 à 3, caractérisé en ce que les coordonnées ainsi déterminées des point caractéristiques de courbe (9) peuvent être sorties dans un affichage alpha-numérique (11).

5. Appareil enregistreur selon une des revendications 1 à 4, caractérisé en ce que la seconde mémoire (3) ou bien est susceptible d'être programmée et d'être effacée dans un emplacement d'inscription (2), et d'être lue dans un emplacement spécial de lecture (4), ou bien est susceptible, par commutation, de recevoir des inscriptions, d'être effacée, et d'être lue, dans l'emplacement d'inscription (2).

## Fig. 1

Steuerung

Schreiben

Lesen

Kassette

Kassette

Austausch oder Umschaltung

EP 0 095 746 B1

Fig.2

X-1006 X-1500

EP 0 095 746 B1